# EUROPEAN PATENT SPECIFICATION

(11) **EP 2 091 998 B1**
(45) Date of publication and mention of the grant of the patent: **13.03.2019**
(21) Application number: 07859403.3
(22) Date of filing: 17.12.2007
(51) Int. Cl.: C08H 1/06, C08F 290/06, C08G 59/14, C08G 65/333, C08G 81/00, C08L 63/00

(54) **BIODEGRADABLE POLYMERIC DERIVATIVES**
BIOABBAUBARE POLYMERDERIVATE
DÉRIVÉS POLYMÈRES BIODÉGRADABLES

(30) Priority: 19.12.2006 IT RM20060682
(43) Date of publication of application: 26.08.2009
(73) Proprietor: Sicit Chemitech S.p.A., 36072 Chiampo (VI) (IT)
(72) Inventor: CANDIDO, Manuela Cinzia, 36071 Arzignano Vi (IT); PENCO, Maurizio, 25128 Brescia (IT); SARTORE, Luciana, 36035 Marano Vicentino Vi (IT); SASSI, Andrea, 25133 Brescia (IT)
(74) Representative: Germinario, Claudio
(86) International application number: PCT/IB2007/055167
(87) International publication number: WO 2008/075279

(56) References cited:
- EP-A- 0 898 973
- EP-A- 1 621 587
- WO-A-93/15189
- WO-A-03/068192
- WO-A-2006/003352
- FR-A- 2 774 096
- US-A- 5 219 564
- US-A- 5 328 955
- US-A1- 2003 083 389
- LI JING ET AL: "Synthesis of polyethylene glycol (PEG) derivatives and PEGylated-peptide biopolymer conjugates" 17 May 2003 (2003-05-17), BIOMACROMOLECULES, ACS, WASHINGTON, DC, US, PAGE(S) 1055 - 1067 , XP002328259 ISSN: 1525-7797 abstract; figure 4

## Description

The present invention relates to a class of adducts containing peptidic-based segments, of proteic hydrolysates and gelatins, chemically bound to polymeric-based segments of polyethylenglycols (PEG) with variable length and processes for the preparation thereof. The materials can also contain segments of acrylic or vinylic polymers.

### FIELD OF THE INVENTION

The present invention relates to proteic hydrolysate polymer and gelatin-polymer adducts, to processes for the preparation thereof and to the use of said adducts in the industrial field of the plastic materials and in particular for the production of packagings, of culture protection means and of disposable materials of daily use and in the tanning field. More particularly, the invention relates to proteic hydrolysate PEG (polyethylene glycols) adducts and gelatin-PEG adducts, to which acrylic or vinylic polymers can be stapled. In these last materials the acrylic or vinylic polymer is bound to the proteic hydrolysate or to the gelatin by means of a spacer arm constituted by PEG with variable length.

### STATE OF ART

Proteic hydrolysates, which are constituted by mixtures of free amino acids, peptides and oligopeptides, belong to the state of art.
The products obtainable by hydrolysis of materials which can be designated as products, by-products, waste, residues of animal and/or vegetable origin are several; they differentiate for the composition of the free and total amino acids, for the content of free amino acids, for the distribution of the molecular weights and of the average molecular weight. The starting material, the hydrolysability feature of each peptidic bond and the different degradability of the free amino acids, typical of each hydrolysis reaction environment, determines the great variety of potentially available proteic hydrolysates.

Some manufacture processes, used for obtaining proteic hydrolysates produced from the by-products and/or waste and/or residues of the tanning cycle obtained before or after the tanning phase, are described in the Italian patent application 85511/A/82 and in the European patent application with publication number EP1021958A1 in the name of the Applicant.
The same productive processes used for processing by-products and/or waste and/or residues in the working of tanning leathers, can be entirely or partially used for the processing of products, by-products, waste or residues of animal or vegetable origin of the agro-food industry.
The technical progress and the continuous increase in the energetic costs have made convenient and usable innovative techniques such as, for example, the use of enzymes for the hydrolysis and of all techniques useful for improving the organolectic properties (for example, colour, odour) and chemical features (for example saline content, distribution of molecular weights).

The gelatins obtained from by-products and/or waste and/or residues of the tanning cycle obtained before and after the tanning phase, where mainly mild hydrolysis treatments are carried out, belong to the state of art.

In particular, the proteic hydrolysates obtained from by-products and residues of the leather working are appreciated in the agricultural field for the biostimulating properties.

The uses of the proteic hydrolysates in the industrial field are several; in particular Manzo and Fedele (1994 and 1996) have studied the possibility of using such products in the tanning field as such or as copolymers with methyl methacrylate or acrylonitrile, in tanning and finishing (Cuo. Pelli. Mater. 1989, 378-391).

### DESCRIPTION OF THE INVENTION

The object of the present invention is a process for the production of adducts of formula (1) 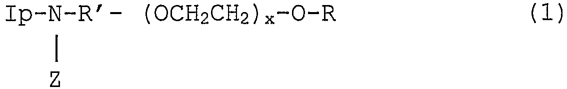 comprising the reaction in water or aqueous solvent of a proteic hydrolysate or gelatin of formula and/or the mixture thereof of formula (3)

IpNH₂ (3)

with a compound of formula (4)

R- (OCH₂CH₂)ₓ - OR (4)

wherein represent
Ip the aminoacidic, peptidic or polypeptidic residue of
   the proteic hydrolysate or gelatin, wherein said hydrolysate and/or gelatin are obtained from by-products and/or waste and/or residues coming from the tanning industry obtained before and after the tanning phase or from by-products and/or products of vegetal origin, agro-industrial scraps, by-products and/or products of animal origin;
Z -H or -R'- (OCH₂CH₂)ₓ-O-R;
x an integer selected by the class formed by the integers 3, 9 or 13;
R 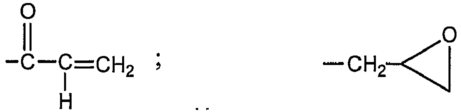
R'

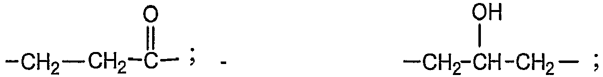

According to the present invention, the proteic hydrolysate and/or gelatin of formula (3) has a ratio between α-aminic nitrogen and organic nitrogen lower than or equal to 0.5 and an average molecular weight comprised between 200 and 100,000.

Also the adducts of formula (1) obtainable according to the process shown previously, form an object of the present invention.

### Description of the drawings

Three figures of drawings are enclosed with the present invention which represent:
figure 1 a Gel-Permeation chromatography of proteic hydrolysates derivatized with polymers according to the invention;
figure 2 the percentage of water absorbed until whole decomposition of films obtained from proteic hydrolysates derivatized with polymers and
figure 3 the weight loss until whole decomposition of films obtained from proteic hydrolysates derivatized with polymers.

The adducts of formula (1) are typically prepared in water without adding catalysts and they can be utilized directly.

An additional object of the present invention is a process for the production of cross-linked adducts, wherein the adduct of formula (1) 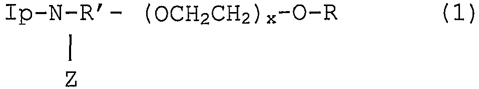 wherein the substituents have the meanings shown previously, is made to react with a condensing agent or a cross-linking agent or a radical initiator, with the aim of provoking a reticulation.
Preferably compounds chosen from the class formed by amines, persulfates, peroxides and/or azocompounds are added. The product can reticulate, therefore it becomes insoluble and films with various thickness can be obtained. Such films are biodegradable and the decomposition speed is function of the structure thereof as underlined in the following examples. Also the reticulated adducts obtainable from the process just described and the biodegradable materials obtained from these adducts form an object of the invention.

The products of formula (1) can also be made to copolymerize with acrylic or vinylic monomers.
Therefore, an additional object of the present invention is a process for the production of adducts of formula (2) 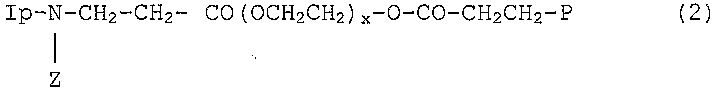 comprising, a reaction between a compound of formula (1) 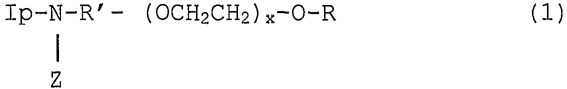 and monomers of acrylic and/or vinylic type of general formula (5) 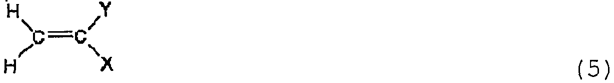 wherein
Ip represents the aminoacidic, peptidic or polypeptidic
   residue of the proteic hydrolysate or gelatin, wherein said hydrolysate and/or gelatin are obtained from by-products and/or waste and/or residues coming from the tanning industry obtained before and after the tanning phase or from by-products and/or products of vegetal origin, agro-industrial scraps, by-products and/or products of animal origin;
Z corresponds to -H or -R'-(OCH₂CH₂)ₓ-O-R or -CH₂-CH₂-CO(OCH₂CH₂)ₓ-O-CO-CH₂CH₂-P;
x is an integer selected by the class formed by the integers 3, 9 or 13;
R corresponds to
R' corresponds to 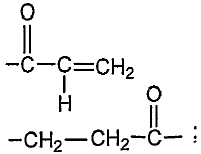
P represents a polymer of acrylic or vinylic type of general formula (6) wherein 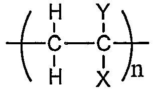
   Y corresponds to H, CH₃, Cl, Br or F;
   X corresponds to: Cl, Br, F, H, 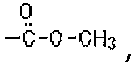 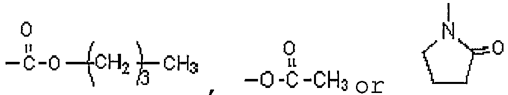
   n is an integer smaller than 250.

Advantageously, said proteic hydrolysate and/or gelatin of formula (3) has a ratio between α-aminic nitrogen and organic nitrogen lower than or equal to 0.5 and an average molecular weight comprised between 200 and 100,000.

Preferably, the polymer of formula (6) is chosen from the class formed by polyvinyl pyrrolidone, polyvinyliden chloride, polyvinyl acetate; and acrylic polymers selected from polymethyl acrylate, polybutyl acrylate, polymethyl methacrylate.

The reaction which leads to the production of compounds of formula (2) is carried out in water or aqueous solvents and it is based upon the copolymerization of acrylic monomers in presence of proteic hydrolysate and/or gelatin modified with polyethylene glycol diacrylate (of formula 1) and it involves the bond between the aminic groups of the proteic hydrolysate and/or gelatin and the acrylic groups of the polyethylene glycol and it allows obtaining new adducts which form too an object of the present invention.

Vinylic polymers selected among polyvinyl pyrrolidone, polyvinylidene chloride, polyvinyl acetate are preferred; and acrylic polymers selected among polymethyl acrylate, polybutyl acrylate, polymethyl methacrylate.

Various proteic hydrolysates and gelatins can be used for the preparation of products and/or of the innovative materials object of this patent. The proteic hydrolysates and the gelatins obtained from by-products, waste and residues of the working of tanning leather and the proteic hydrolysates and the gelatins deriving from slaughtering by-products, such as for example the pork rind and the "Cornunghia" already successfully utilized in the agricultural and industrial field, are suitable particularly to be used as proteic basis for the adducts object of the present invention for the convenient quality/price ratio also associated to a great availability on the market. Also hydrolysates of vegetal origin obtained from soya and maize gluten and hydrolysates of animal origin, such as milk, have features which make them advantageously usable for the implementation of the materials object of the present invention. The difference in the aminoacidic composition and in the molecular weights of the proteic hydrolysates and/or gelatins deriving from the mentioned by-products and/or products of vegetal and animal origin, makes it possible the preparation of adducts with various features which could be better suited to the market requirements and to particular operative requests, such as for example affinity with a certain substrate, more suitable mechanical features, compatibility with other materials etc Experimental tests which have been carried out have shown that also the amino acids precipitated from proteic hydrolysates can be used as such or in mixture with the hydrolysates for the implementation of the polymeric derivatives object of the present invention. In particular, the proteic hydrolysates deriving from by-products and/or waste of the working of the tanning cycle are used as such in the re-tanning formulations and in the dyeing and fattening formulations. In the re-tanning phase, they improve the organolectic properties such as softness, fullness, touch and roundness and important physical properties such as the resistance to tear. In the dyeing and fattening phase they improve the dyeing yield, the brightness and homogeneity. The polymers object of the present invention are able to provide improved applicative properties thanks to the increased compatibility, for example, with mixtures of colorants, to the increased reactivity with respect to the proteic hydrolysates used as such and to the possible use in other leather working phases, such as for example the finishing.

An additional object of the present invention is the use of adducts of formula (1), of cross-linked adducts of formula (1), of adducts of formula (2) and of materials obtainable from these adducts in formulations for the retanning and the leathers' dyeing and the fattening and for the leathers' finishing.

The polymers object of this patent characterizing for the filming and workability properties can be used advantageously in the industrial field of the plastics for the preparation of products usable in the agricultural, industrial field and in the field of the consumer goods.

In agriculture innovative techniques are used ever more frequently providing the use of materials such as cloths and disks for the mulching, seed cells, pots, tissues and protective nets. For the wrapping and packaging smalls bags, films, nets and strings generally made with the conventional plastic materials are used, which, however, from the environmental point of view have the only advantage of optimizing and/or limiting the use of herbicides, fertilizers, irrigation and manpower. For example, cloths for the mulching have been widely used for years as they allow keeping the optimum humidity in the ground by avoiding dehydration and by guaranteeing the protection from intense cold and the defence from the infestation of weeds by avoiding hoeing. Biodegradable and compostable plastic materials are available on the market, obtained from natural sources and therefore renewable such as, for example, those obtained from cellulose derivatives and in particular from maize starch (Mater-bi of Novamont, Italy) and those obtained from lactic acid by fermentation in particular of maize (NatureWorks PLA of Cargill Dow Polymers LLC, USA). The use of biodegradable and compostable plastic materials involves considerable effects for the environmental safeguard as there is the reduction in the quantity of disposed waste, the recycling of resources, the exploitation of renewable resources with the pollution reduction. For example, in case of use of biodegradable cloths for the mulching, the removal and disposal phase is eliminated and at the same time the cultivation technique is improved as there is a greater compatibility with the soil and the vegetal organisms. The use of biodegradable materials of natural origin confers additional economical advantages such as the cost savings linked to the ground compactation, the drilling, the removal, the disposal and additional agronomic advantages such as the good adhesion to the ground and the improvement in the quality of the ground which remains softer and aired. The use cycle ends up with the milling and/or silting and it starts again with the supply of biodegradable natural residues to the ground useful for the growth of new cultivations.

The technological evolution associated to the experimentation of these materials has made possible the success of materials with higher and higher and more and more competitive performances from the economical point of view, thanks to the implementation thereof at cheaper costs and, from the application point of view, thanks to the implementation thereof with sealing features compatible with the requested time, resistance to the atmospherical agents, mechanical resistance for the mechanization, workability, mouldability, colourability in line with the productive needs and the usual utilized applicative technologies. The materials obtained from the derivatization of proteic hydrolysates and gelatins with polymers allow preparing products alternative to the conventional plastic and to biodegradable and compostable plastic materials existing on the market. They can be used in the industrial, agricultural and consumer-good field and they further have the advantage of having fertilizing and biostimulating qualities which are typical of the proteic hydrolysates. The proper choice of the proteic hydrolysate and/or gelatin and the possible addition of other substances with fertilizing action or other actions, will make the use of these materials in agriculture still more advantageous. For example, in case of cloths for the mulching obtained by using proteic hydrolysates, natural residues remain in the ground, able to provide a fertilizing and biostimulating action. The proteic hydrolysates have a recognized biostimulating activity since they contribute to improve the quality, the productions and the development of the vegetal species. They facilitate the growth and the development of the root apparatus, the biomass, the inflorescences and the fruits in qualitative and quantitative terms; they confer a higher resistance to climatic and physiological stresses, an improved absorption and the use of nutrients. Generally, they improve the performances of all physiological activities involving high productive performances accompanied by consequently decreased supplies of pesticides and supporting inorganic fertilizers.

The materials object of this patent can be used for the production of other materials useful for the agriculture such as for example disks, nets, tissues for the revegetation, pots, seed cells for the agriculture and the forestry plantation, containers for the transplant, strings.

The materials object of this patent can be obtained in solution and/or aqueous or hydroalcoholic suspension. Such formulations allow the direct dispersion onto the ground with the possible "in situ" preparation of films characterized by a resistance and biodegradability which can be modulated depending upon the operability requested by the specific cultures to be protected. The materials can be preferably, but not exclusively, in aqueous or hydroalcoholic solution and they can include pigments and/or reinforcing fibers and/or other materials or substances which make them more suitable to the specific applications. The materials in liquid form can be applied, for example, with the spraying techniques already utilized nowadays for the treatments with pesticides and which can be used with the applicative techniques which are and will be the result of the technological evolution. The mulching carried out with products in liquid form, by allowing the "direct application" onto the ground, has a lower operative cost with respect to the mulching with cloths as it requires less manpower. An additional economic advantage is represented by the fact that the soluble or suspendable products do not need other working phases, such as filming, moulding or extrusion processes. Furthermore, they are more versatile as they are apt to be deposited with variable thicknesses upon use by also allowing the easy additivation of substances such as pigments, reinforcing fibres, fertilizers, pesticides, etc.

The product object of this patent can be used in agriculture also for implementing biodegradable capsules, for example for seeds, or for implementing products and in particular for the microencapsulation of active substances to be used by leaf or root way or directly onto the fruits with the aim of opposing the washout of active substances and for a correct release in time.

An additional object of the present invention is the use of adducts of formula (1), the cross-linked adducts of formula (1), the adducts of formula (2) and the materials which can be obtained from these adducts for the production of materials for the agriculture, such as cloths and disks for the mulching, seed cells, pots, tissues, protective nets and for the production of soluble and/or suspendable materials, to be applied and generated "in situ".

The materials object of this patent are suitable to be used in the packaging field for the possibility of implementing, for example, sacs, shoppers, bags, nets, strings, cloths with innovative features of biodegradability. The materials object of this patent are suitable to be used for implementing consumer products such as objects, tissues and disposable products.

An additional object of the present invention is the use of adducts of formula (1), the cross-linked adducts of formula (1), the adducts of formula (2) and the materials which can be obtained from these adducts for the production of materials substituting the plastic materials in the field of consumer goods.

### EXAMPLES

In the following examples the term "Ip" designates the proteic hydrolysate or gelatin, whereas the polymers will be referred to with the abbreviations usual for the art. Only some proteic hydrolysates with particular chemical-physical features will be shown.

### A. Modification of Proteic Hydrolysate with polyethylene glycol Example 1 (Sicit1)

### Reagents:

| | |
|---|---|
| Quantity of proteic basis in g (α-aminic nitrogen (% p/p) = 1.07; dry substance (% p/p) = 66.4) | 400.17 |
| Quantity of PEG diacrylate (Mw:700) in g | 214.65 |
| Quantity of soda (1M) in g | 7.2 |
| Quantity of water in g | 180.32 |

### Methodology

Add the PEG diacrylate to the proteic hydrolysate (Ip) and stir for about 10 minutes with mechanical stirrer. Dilute with 2/3 of water by keeping the reaction mixture under stirring. Add NaOH until pH 8 and then the remaining quantity of water.

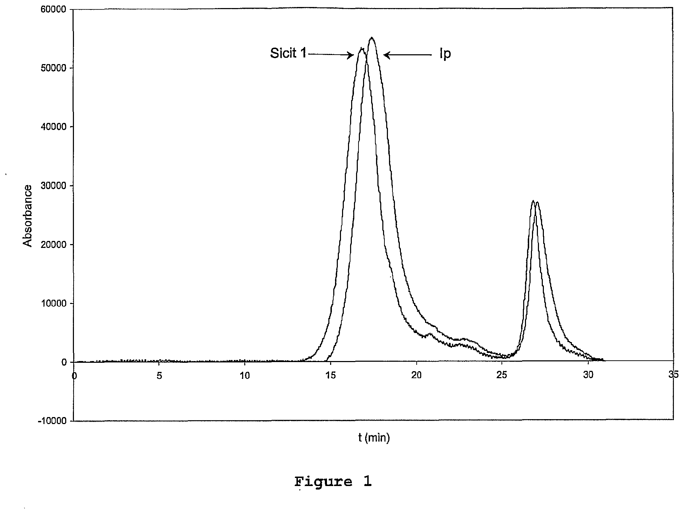

The reaction mixture is to be kept under stirring for about 24h by controlling the pH, which has to be kept between 7 and 8, in the first reaction hours. The product was characterized by means of IR, NMR, gel permeation chromatography techniques (figure 1) and furthermore according to the method for determining the aminic groups by means of reaction of Snyder and Sabocinski with 2,4,6-trinitrobenzenesulfonic acid (Snyder S.L. and Sabocinski P.Z., Anal.Biochem. 64, 248-288, 1975), the modification level of the proteic hydrolysate was evaluated (Table 1).

### Example 2 (Sicit2)

### Reagents:

| | |
|---|---|
| Quantity of proteic basis in g (α-aminic nitrogen (% p/p) = 1.07; dry substance (% p/p) = 66.4) | 400.43 |
| Quantity of PEG diacrylate (Mw:700) in g | 107.04 |
| Quantity of soda (1M) in g | 5.6 |
| Quantity of water in g | 291.32 |

### Methodology

As described in example 1 it is the addition reaction between PEG diacrylate (Mw 700) and Ip. The samples were prepared with the same methodology but with a lower PEG ratio and consequently a lower modification percentage (Table 1).

### Example 3

### Reagents:

| | |
|---|---|
| Quantity of proteic basis in g (α-aminic nitrogen (% p/p) = 1.07; dry substance (% p/p) = 66.4) | 100.1 |
| Quantity of PEG diacrylate (Mw:700) in g | 53.5 |
| Quantity of soda (1M) in g | 1.2 |
| Quantity of water in g | 45.6 |
| Quantity of ammonium persulphate in g | 0.5 |

### Methodology

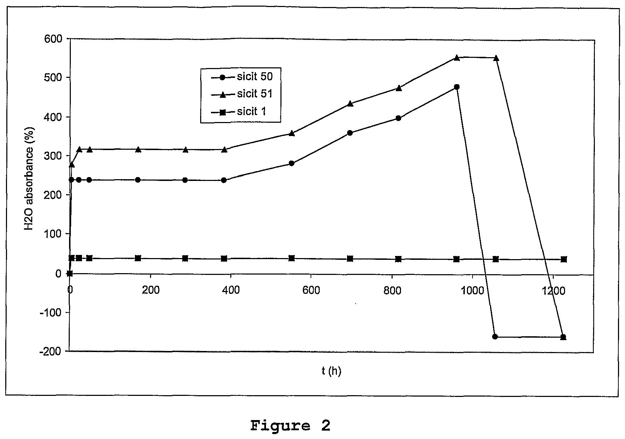

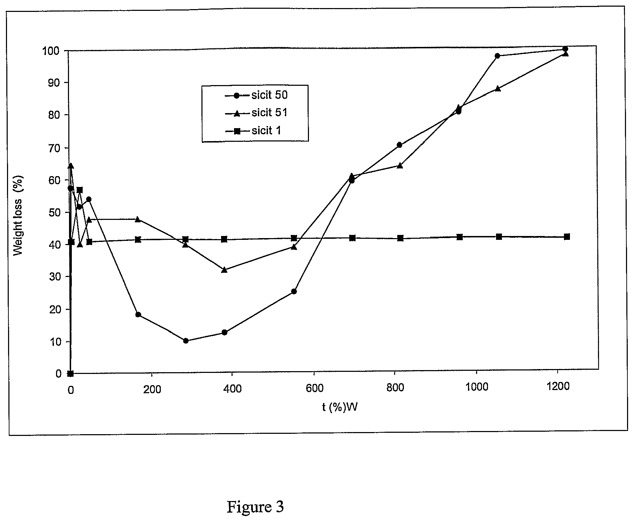

This sample can be obtained by polymerization starting from the sample described in example 1 (and therefore also the one in the example 2) and it shows a very high molecular weight. The methodology described in the example 1 is followed in order to obtain the proteic hydrolysate modified with PEG and then a radicalic initiator such as the ammonium persulphate (or benzoil peroxide) is added to the reaction mixture and the mixture is heated in oil bath at 60 °C for 4h. As an alternative, the product can be poured, after adding the radicalic initiator, over moulds with suitable sizes and heated in stove at 60°C. The polymerization starts which leads to the production of cross-linked and insoluble products and, in case it has taken place in moulds, films with variable sizes are obtained which reinflate in water and degrade with variable speed (Table 1, Figure 3, Figure 2).

### Example 4 (Sicit4)

### Reagents:

| | |
|---|---|
| Quantity of proteic basis in g (α-aminic nitrogen (% p/p) = 1.07; dry substance (% p/p) = 66.4) | 404.6 |
| Quantity of PEG diglycidyl ether (Mw:526) in g | 162.35 |
| Quantity of soda (1M) in g | 2.1 |
| Quantity of water in g | 240.1 |

### Methodology

The sample is prepared with the same methodology of the material described in the example 1, but using PEG diglycidyl ether instead of PEG diacrylate (Table 1).

### Example 5 (Sicit6)

### Reagents:

| | |
|---|---|
| Quantity of proteic basis in g (α-aminic nitrogen (% p/p) = 1.07; dry substance (% p/p) = 66.4) | 406.24 |
| Quantity of PEG diglycidyl ether (Mw:526) in g | 81.63 |
| Quantity of soda (1M) in g | 1.58 |
| Quantity of water in g | 320.53 |
| Quantity of ethylendiamine in g | 2.5 |

### Methodology

Also the proteic derivatives of the PEG diglycidyl ether can be cross-linked by condensation or by means of using "hardening" reagents such as, for example, the ethylendiamine. The material is prepared by following the same methodology described in the example 4; after 24 h of reaction under stirring and at room temperature, the trietylamine is added. The materials starts reticulating widely. Also in this case the reticulation can be made in suitable moulds by obtaining films with various thicknesses. (Table 1).

### Example 6 Sicit 7

### Reagents:

| | |
|---|---|
| Quantity of proteic basis in g (α-aminic nitrogen (% p/p) = 3.26; dry substance (% p/p) = 71.1) | 200.05 |
| Quantity of PEG diglycidyl ether (Mw:526) in g | 40.00 |
| Quantity of soda (1M) in g | 1.6 |
| Quantity of water in g | 158.4 |
| Quantity of ethylendiamine in g | 1.2 |

### Methodology

The proteic derivatives of polyethylene glycol can be obtained starting from proteic hydrolysates with different content of aminic groups and therefore with different molecular weight; the same methodology of example 5 is followed by using a suitable proteic hydrolysate (Table 1).

### Example 7 Sicit 8

### Reagents:

| | |
|---|---|
| Quantity of proteic basis in g (α-aminic nitrogen (% p/p) = 0.23; dry substance (% p/p) = 42.12) | 100.02 |
| Quantity of PEG diglycidyl ether (Mw:526) in g | 12.79 |
| Quantity of soda (1M) in g | 0.5 |
| Quantity of water in g | 12.88 |
| Quantity of ethylene diamine in g | 0.4 |

### Methodology

The proteic derivatives of polyethylene glycol can be obtained starting from proteic hydrolysates with different content of aminic groups and therefore with different molecular weight; the same methodology of example 5 is followed by using a suitable proteic hydrolysate. (Table 1, Figure 2 and Figure 3).

Two samples with the same composition of the example 7, but with different thickness of 1.3 mm and 1.8 mm, respectively called Sicit 50 and Sicit 51, were obtained.

### B. Modification of proteic hydrolysate with acrylic or vinylic polymers

### Example 8 Sicit 16

### Reagents:

| | |
|---|---|
| Quantity of proteic basis in g (α-aminic nitrogen (% p/p) = 1.07; dry substance (% p/p) = 66.4) | 400.22 |
| Quantity of PEG diacrylate (Mw: 258) in g | 28.0 |
| Quantity of soda (1M) in g | 11.0 |
| Quantity of water in g | 210.9 |
| Quantity of vinylpyrrolidone in g | 160.01 |
| Quantity of ammonium persulphate in g | 1.6 |

### Methodology

The product was obtained by means of a first functionalization of the proteic hydrolysate with insertion of a spacing arm of PEG diacrylate and a subsequent stapling of PVP.

The proteic base, diluted with about 70 g of H₂O and mixed with mechanical stirrer, is added with PEG diacrylate. Soda is added until pH 8. After 24h under stirring at room temperature, vinylpyrrolidone, the remaining water and the ammonium persulphate are added to the reaction mixture.

The mixture is heated at 60°C in oil bath for 4 hours by keeping the product under stirring (Table 1).

### Example 9 Sicit 19

### Reagents:

| | |
|---|---|
| Quantity of proteic basis in g (α-aminic nitrogen (% p/p) = 3.26; Dry substance (% p/p) = 71.1) | 228.7 |
| Quantity of PEG diacrylate (Mw: 258) in g | 16.0 |
| Quantity of soda (1M) in g | 6.35 |
| Quantity of water in g | 114.3 |
| Quantity of vinylpyrrolidone in g | 91.4 |
| Quantity of ammonium persulphate in g | 0.92 |

### Methodology

The proteic derivatives of polyvinyl pyrrolidone can be obtained starting from proteic hydrolysates with different content of aminic groups and therefore with different molecular weight; the same methodology followed in the example 8 using a suitable proteic hydrolysate is followed (Table 1).

### Example 10 Sicit 20

### Reagents:

| | |
|---|---|
| Quantity of proteic basis in g (α-aminic nitrogen (% p/p)=0.23; dry substance (% p/p) = 42.12) | 100 |
| Quantity of PEG diacrylate (Mw: 258) in g | 4.74 |
| Quantity of soda (1M) in g | 2.5 |
| Quantity of water in g | 18.66 |
| Quantity of vinylpyrrolidone in g | 25.36 |
| Quantity of ammonium persulphate in g | 0.25 |

### Methodology

The proteic derivatives of polyvinyl pyrrolidone can be obtained starting from proteic hydrolysates with different content of aminic groups and therefore with different molecular weight; the same methodology followed in the example 8 is followed by using a suitable proteic hydrolysate (Table 1).

### Example 11 Sicit 21

### Reagents:

| | |
|---|---|
| Quantity of proteic basis in g (α-aminic nitrogen (% p/p) = 1.07; dry substance (% p/p)= 66.4) | 400.22 |
| Quantity of PEG diacrylate (Mw: 258) in g | 40.0 |
| Quantity of soda (1M) in g | 20.0 |
| Quantity of water in g | 260.9 |
| Quantity of methylacrylate in g | 80.01 |
| Quantity of benzoyl peroxide in g | 1.6 |

### Methodology

The product was obtained by means of a first functionalization of the proteic hydrolysate with insertion of a spacing arm of PEG diacrylate and a subsequent stapling of methyl acrylate.

The proteic base, diluted with about 70 g of H₂O and mixed with mechanical stirrer, is added with PEG diacrylate. Soda is added until pH 8. After 24h under stirring at room temperature, methyl acrylate, the remaining water and, lastly, the initiator, the benzoyl peroxide are added to the reaction mixture.

The mixture is heated at 70°C in oil bath for 4 hours by keeping the product under stirring (Table 1).

### Example 12 Sicit 23

### Reagents:

| | |
|---|---|
| Quantity of proteic basis in g (α-aminic acid (% p/p)=1.07; dry substance (% p/p)= 66,4) | 400.6 |
| Quantity of PEG diacrylate (Mw: 258) in g | 40.4 |
| Quantity of soda (1M) in g | 20.1 |
| Quantity of water in g | 260.0 |
| Quantity of butyl acrylate in g | 80.1 |
| Quantity of benzoyl peroxide in g | 1.6 |

### Methodology

The product was obtained by means of a first functionalization of the proteic hydrolysate with insertion of a spacing arm of PEG diacrylate and a subsequent stapling of butyl acrylate. The same procedure described in the example 11 is followed, by replacing an equal quantity of butyl acrylate to the methyl acrylate. The product is kept in oil bath at 85°C for 4 hours under stirring (Table 1).

### Example 13 Sicit 25

### Reagents:

| | |
|---|---|
| Quantity of proteic basis in g (α-aminic nitrogen (% p/p)= 1.07; dry substance (% p/p)= 66.4) | 400.22 |
| Quantity of PEG diacrylate (Mw: 258) in g | 40.0 |
| Quantity of soda (1M) in g | 20.0 |
| Quantity of water in g | 260.7 |
| Quantity of methylmethacrylate in g | 80.0 |
| Quantity of Benzoyl Peroxide in g | 1.6 |

### Methodology

The product was obtained by means of a first functionalization of the proteic hydrolysate with insertion of a spacing arm of PEG diacrylate and a subsequent stapling of methyl methacrylate. The same procedure described in the example 11 is followed by replacing an equal quantity of methyl methacrylate to the methyl acrylate. The product is kept in oil bath at 80°C for 4 hours under stirring (Table 1).

### Example 14 Sicit 27

### Reagents:

| | |
|---|---|
| Quantity of proteic basis in g (α-aminic nitrogen (% p/p)= 1.07; Dry substance (% p/p)=66.4) | 400.26 |
| Quantity of PEG diacrylate (Mw: 258) in g | 40.3 |
| Quantity of soda (1M) in g | 20.0 |
| Quantity of water in g | 260.5 |
| Quantity of VinylAcetate in g | 80.0 |
| Quantity of BenzoylPeroxide in g | 1.6 |

### Methodology

The product was obtained by means of a first functionalization of the proteic hydrolysate with insertion of a spacing arm of PEG diacrylate and a subsequent stapling of vinyl acetate. The same procedure described in the example 11 is followed by replacing an equal quantity of vinyl acetate to the methyl acrylate. The product is kept in oil bath at 70°C for 4 hours under stirring (Table 1).

### Example 15

### Reagents:

| | |
|---|---|
| Quantity of proteic basis in g (α-aminic nitrogen (% p/p)= 1.07; Dry substance (% p/p)= 66.4) | 400.26 |
| Quantity of PEG diacrylate (Mw: 258) in g | 40.2 |
| Quantity of soda (1M) in g | 20.0 |
| Quantity of water in g | 260.6 |
| Quantity of vinylidene chloride in g | 80.0 |
| Quantity of BenzoylPeroxide in g | 1.6 |

The product was obtained by means of a first functionalization of the proteic hydrolysate with insertion of a spacing arm of PEG diacrylate and a subsequent stapling of methyl methacrylate. The same procedure described in the example 11 is followed by replacing an equal quantity of vinylidene chloride to the methyl acrylate. The reaction mixture is kept in reactor at T= 70 °C, p = 50 atm for 4 hours under stirring (Table 1) .

### C. Applications

### Example 16

Samples obtained in form of film with a thickness of 1.5 mm were cut out so as to obtain a probe with sizes: L=3cm, h=1.5 cm. Such probes, weighed, were plunged into 10 mL of distilled water and thermostated at 24°C. At pre-established times the test pieces and the aqueous phase were measured and weighed. Table 2 and figure 2 show the quantity of absorbed water, weight loss and the whole decomposition time for the test pieces obtained according to example 3 and example 7.

**Table 1. Composition of the materials and evaluation of the modification of the aminic groups of the proteic hydrolysate**

| Example Nr. (prod. code) | % p/p Composition | | | | -NH₂ modif. (%) |
|---|---|---|---|---|---|
| | PEG da | PEG dg | Other polymer | Ip | |
| 1 | M_{w}:700 | - | - | α-NH₂: 1.07% | 46 |
| Sicit 1 | 26.7% | | | 33.1% | |
| 2 | M_{w}:700 | - | - | α-NH₂: 1.07% | 37 |
| (Sicit 2) | 13.3% | | | 33.1% | |
| 3 | M_{w}: 700 | - | - | α-NH₂: 1.07% | 46 |
| Sicit 1+p | 26.7% | | | 33.1% | |
| 4 | - | M_{w}:526 | - | α-NH₂: 1.07% | 40 |
| Sicit 4 | | 20.1% | | 33.2% | |
| 5 | - | M_{w}:526 | | α-NH₂: 1.07% | 20 |
| Sicit 6 | | 10.1% | | 33.3% | |
| 6 | - | M_{w}: 526 | | α-NH₂: 3.26% | 17 |
| Sicit 7 | | 9.99% | | 35.5% | |
| 7 | | M_{w}:526 | | α-NH₂: 0.23% | 25 |
| Sicit 8 | | 10.1% | | 33.3% | |
| 8 | M_{w}:258 | - | PVP: 20% | α-NH₂: 1.07% | 13 |
| Sicit 16 | 3.5% | | | 33.1% | |
| 9 | M_{w}:258 | - | PVP: | α-NH₂: 3.26% | 5 |
| Sicit 19 | 3.5% | | 19.97% | 35.53% | |
| 10 | M_{w}:258 | - | PVP: | α-NH₂: 0.23% | 30.5 |
| Sicit 20 | 3.12% | | 16.74 | 27.8 | |
| 11 | M_{w}:258 | - | PMA | α-NH₂: 1.0% | 20.0 |
| Sicit 21 | 4.98% | | 9.97% | 33.1% | |
| 12 | M_{w}:258 | - | PBA | α-NH₂: 1.07% | 20.1 |
| Sicit 23 | 5% | | 9.98% | 33.13% | |
| 13 | M_{w}: 258 | - | PMMA | α-NH₂: 1.07% | 19.8 |
| Sicit 25 | 4.98% | | 9.97% | 33.1% | |
| 14 | M_{w}: 258 | - | PVAc | α-NH₂: 1.07% | 20.0 |
| Sicit 27 | 5% | | 10% | 33.1% | |
| 15 | M_{w}:258 | - | PVDC | α-NH₂: 1.07% | 20.0 |
| | 5% | | 9.97% | 33.08% | |

| | | | | | |
|---|---|---|---|---|---|
| Legend: PEG da = PEG diacrylate (characterized by the molecular weight shown in the table); PEG dg = PEG diglycidyle (characterized by the molecular weight shown in the table); Ip = Proteic hydrolysate (characterized by the percentage of aminic groups shown in the table); PVP =polyvinyl pyrrolidone, PMA = polymethylacrylate; PBA=polybutylacrylate; PMMA=polymethylmethacrylate; PVAc=polyvinyl acetate; PVDC=polyvinylidene chloride. | | | | | |

## Claims

1. A process for the production of adducts of formula (1) 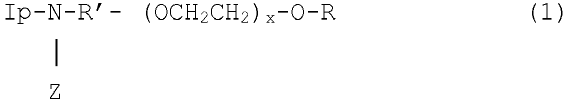 comprising the reaction in water or aqueous solvent of a proteic hydrolysate or gelatin of formula and/or of mixtures thereof of formula (3)
IpNH₂ (3)
with a compound of formula (4)
R-(OCH₂CH₂)ₓ-OR (4)
wherein represent
Ip the aminoacidic, peptidic or polypeptidic residue of the proteic hydrolysate or gelatin, wherein said hydrolysate and/or gelatin are obtained from by-products and/or waste and/or residues coming from the tanning industry obtained before and after the tanning phase or from by-products and/or products of vegetal origin, agro-industrial scraps, by-products and/or products of animal origin;
Z -H or -R'- (OCH₂CH₂)ₓ-O-R;
x an integer selected by the class formed by the integers 3, 9 or 13;
R 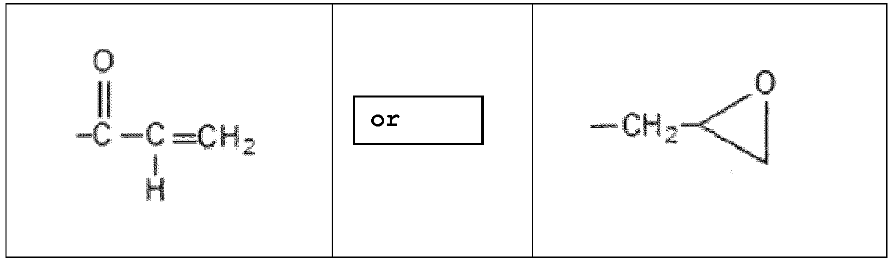
R'

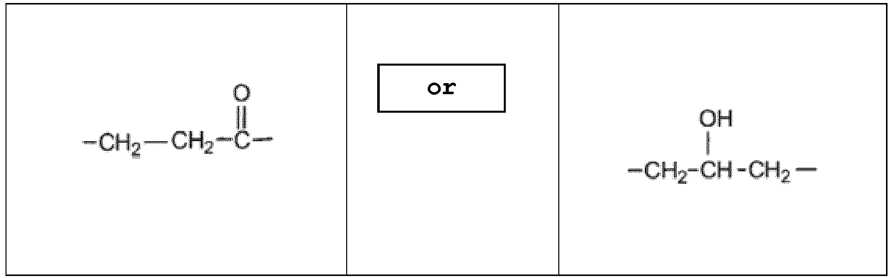

2. The process according to claim 1, wherein said proteic hydrolysate and/or gelatin in said formula (1) has a ratio between α-aminic nitrogen and organic nitrogen smaller than or equal to 0.5 and an average molecular weight comprised between 200 and 100,000.

3. Adduct of formula (1) obtainable according to the process as claimed in at least one of the claims 1 to 2.

4. A process for the production of cross-linked adducts, wherein the adduct of formula (1) 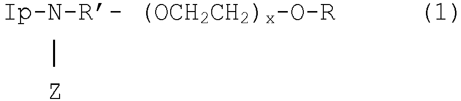 wherein the substituents have the meanings shown in the preceding claims,
is made to react with a condensing agent or with a cross-linking agent or a radical initiator with the aim of provoking a reticulation.

5. The process according to claim 4, wherein said condensing agent or cross-linking agent or radicalic initiator are chosen from the class formed by amines, persulfates, peroxides and/or azo-compounds.

6. Reticulated adduct obtainable from the process as claimed in claims 4 or 5.

7. Biodegradable materials obtainable from the adduct as claimed in claim 6.

8. A process for the production of adducts of formula (2) 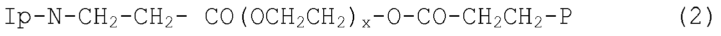 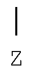 comprising a reaction between a compound of formula (1) 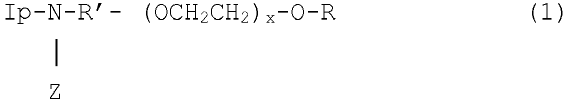 with monomers of acrylic and/or vinylic type of general formula (5) 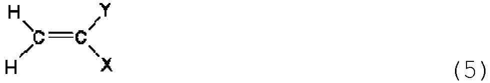 wherein
Ip represents the aminoacidic, peptidic or polypeptidic residue of the proteic hydrolysate or gelatin, wherein said hydrolysate and/or gelatin are obtained from by-products and/or waste and/or residues coming from the tanning industry obtained before and after the tanning phase or from by-products and/or products of vegetal origin, agro-industrial scraps, by-products and/or products of animal origin;
Z corresponds to -H or -R'-(OCH₂CH₂)ₓ-O-R or -CH₂-CH₂-CO(OCH₂CH₂)ₓ-O-CO-CH₂CH₂-P;
x is an integer selected by the class formed by the integers 3, 9 or 13;
R corresponds to
R' corresponds to 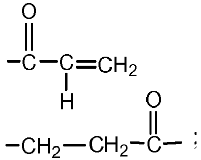
P represents a polymer of acrylic or vinylic type of general formula (6) wherein 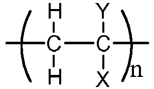
Y corresponds to H, CH₃, Cl, Br or F;
X corresponds to: Cl, Br, F, H, 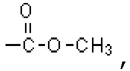 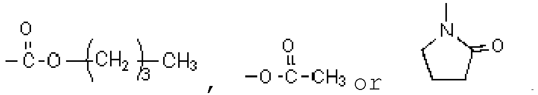
n is an integer smaller than 250.

9. The process according to claim 8, wherein said proteic hydrolysate and/or gelatin in said formula (2) has a ratio between α-aminic nitrogen and organic nitrogen lower than or equal to 0.5 and an average molecular weight comprised between 200 and 100,000.

10. The process according to at least one of the claims 8 to 9, wherein the polymer of said formula (6) is chosen from the class formed by polyvinyl pyrrolidone, polyvinylidene chloride, polyvinyl acetate and acrylic polymers selected among polymethyl acrylate, polybutyl acrylate, polymethyl methacrylate.

11. Adducts obtainable by the process as claimed in at least one of the claims 8 to 10.

12. Use of the adducts as claimed in at least one of the claims 3, 6 and 11 for the production of materials for the packaging.

13. Use of the adducts as claimed in at least one of the claims 3, 6 and 11 for the production of the materials for the agriculture.

14. Use according to claim 13, in soluble and suspendable form, applicable directly onto the ground for the formation of films and cloths for the spray mulching or the mulching carried out with other applicative techniques.

15. Use of the adducts as claimed in at least one of the claims 3, 6 and 11 for the production of the materials to be used as substances for coating seeds or for microencapsulating active substances to be used by foliar or radical way or directly onto fruits, for the release modulation.

16. Use of the adducts as claimed in at least one of the claims 3, 6 and 11 for the production of the materials substituting plastic materials in the field of the consumer goods.

17. Use of the adducts as claimed in at least one of the claims 3, 6 and 11 in formulations for the retanning and the leathers' dyeing and fattening and for the leathers' finishing.

## Patentansprüche

1. Verfahren zur Herstellung von Addukten gemäß Formel (1) 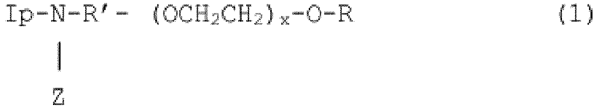 das umfasst: die Reaktion, in Wasser oder einem wässrigen Lösungsmittel, eines Proteinhydrolysats oder einer Gelatine gemäß Formel (3) und/oder Mischungen davon gemäß Formel (3)
IpNH₂ (3)
mit einer Verbindung gemäß Formel (4)
R- (OCH₂CH₂)ₓ - OR (4)
wobei
Ip den aminosäure-, peptid- oder polypeptidhaltigen Rückstand des Proteinhydrolysats oder der Gelatine darstellt, wobei das Hydrolysat und/oder die Gelatine von Nebenprodukten und/oder Abfall und/oder Rückständen erhalten werden, die von der Gerbereiindustrie stammen, und die vor oder nach der Gerbungsphase erhalten werden, oder die von Nebenprodukten und/oder Produkten pflanzlichen Ursprungs, agrarindustriellen Abfällen, Nebenprodukten und/oder Produkten tierischen Ursprungs stammen;
Z -H oder -R'-(OCH₂CH₂)ₓ₋O-R darstellt; x eine ganze Zahl aus der folgenden Gruppe darstellt: 3, 9 oder 13;
R 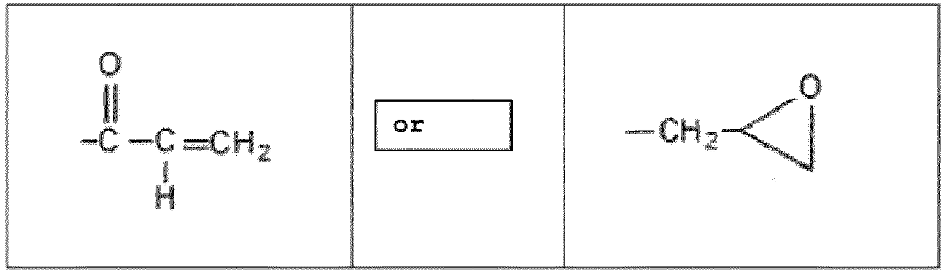 darstellt;
R' 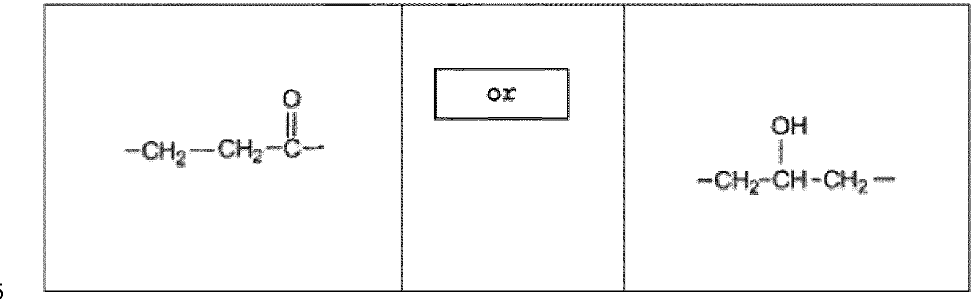
darstellt.

2. Verfahren gemäß Anspruch 1, wobei das Proteinhydrolysat und/oder die Gelatine in der Formel (1) über ein Verhältnis zwischen α-Aminostickstoff und organischem Stickstoff von kleiner oder gleich 0,5 und über ein mittleres Molekulargewicht von 200 - 100.000 verfügt.

3. Addukt gemäß Formel (1), das mit dem Verfahren gemäß wenigstens einem der Ansprüche 1 bis 2 erhalten werden kann.

4. Verfahren zur Herstellung von vernetzten Addukten, wobei das Addukt gemäß Formel (1) 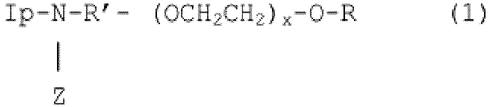 in der die Substituenten über die in den vorangehenden Ansprüchen gezeigten Bedeutungen verfügen, geeignet ist, mit einem Kondensationsmittel oder mit einem Vernetzungsmittel oder einem Radikalstarter zu reagieren, mit dem Ziel eine Netzstruktur hervorzurufen.

5. Verfahren gemäß Anspruch 4, wobei das Kondensationsmittel oder das Vernetzungsmittel oder der Radikalstarter aus der folgenden Gruppe ausgewählt werden:
Amine, Persulfate, Peroxide und/oder Azoverbindungen.

6. Vernetztes Addukt, das aus dem Verfahren gemäß den Ansprüchen 4 oder 5 erhalten werden kann.

7. Biologisch abbaubare Materialien, die von dem Addukt gemäß Anspruch 6 erhalten werden können.

8. Verfahren zur Herstellung von Addukten gemäß Formel (2) 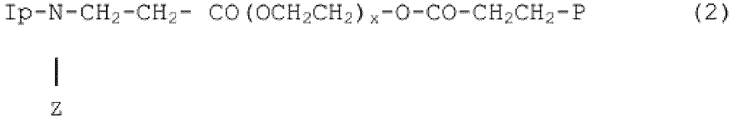 das umfasst: eine Reaktion zwischen einer Verbindung gemäß Formel (1) 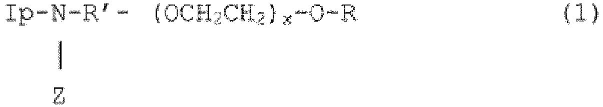 mit Acryl- und/oder Vinyl-Monomeren gemäß der allgemeinen Formel (5) 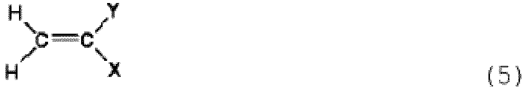 wobei
Ip den aminosäure-, peptid- oder polypeptidhaltigen Rückstand des Proteinhydrolysats oder der Gelatine darstellt, wobei das Hydrolysat und/oder die Gelatine von Nebenprodukten und/oder Abfall und/oder Rückständen erhalten werden, die von der Gerbereiindustrie stammen, und die vrn oder nach der Gerbungsphase erhalten werden, oder die von Nebenprodukten und/oder Produkten pflanzlichen Ursprungs, agrarindustriellen Abfällen, Nebenprodukten und/oder Produkten tierischen Ursprungs stammen;
Z -H oder -R'-(OCH₂CH₂)ₓ-O-R oder -CH₂-CH₂-CO(OCH₂CH₂)ₓ₋O-CO-CH₂CH₂-P darstellt;
x eine ganze Zahl aus der folgenden Gruppe darstellt: 3, 9 oder 13;
R 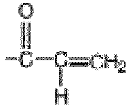 entspricht;
R' 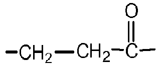 entspricht;
P ein Acryl- oder Vinyl-Polymer gemäß der allgemeinen Formel (6) darstellt, wobei 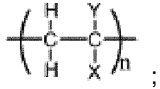
Y H, CH₃, Cl, Br oder F entspricht;
X Cl, Br, F, H, 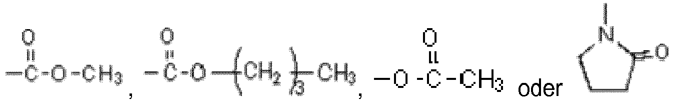 entspricht;
n eine ganze Zahl kleiner 250 ist.

9. Verfahren gemäß Anspruch 8, wobei das Proteinhydrolysat und/oder die Gelatine in der Formel (2) über ein Verhältnis zwischen α-Aminostickstoff und organischem Stickstoff von kleiner oder gleich 0,5 und über ein mittleres Molekulargewicht von 200 - 100.000 verfügt.

10. Verfahren gemäß mindestens einem der Ansprüche 8 bis 9, wobei das Polymer der Formel (6) aus der folgenden Gruppe ausgewählt wird: Polyvinylpyrrolidon, Polyvinylidenchlorid, Polyvinylacetat und Acrylpolymere ausgewählt aus Polymethylacrylat, Polybutylacrylat, Polymethylmethacrylat.

11. Addukte, die durch das Verfahren gemäß mindestens einem der Ansprüche 8 bis 10 erhalten werden können.

12. Verwendung der Addukte gemäß mindestens einem der Ansprüche 3, 6 und 11 zur Herstellung von Materialien für Verpackungen.

13. Verwendung der Addukte gemäß mindestens einem der Ansprüche 3, 6 und 11 zur Herstellung der Materialien für die Landwirtschaft.

14. Verwendung gemäß Anspruch 13, in löslicher und suspendierbarer Form, anwendbar direkt auf dem Boden zur Bildung von Filmen und auf Tüchern zum Spraymulchen oder Mulchen, das mit anderen geeigneten Verfahren ausgeführt wird.

15. Verwendung der Addukte gemäß mindestens einem der Ansprüche 3, 6 und 11 zur Herstellung der Materialien zur Verwendung als Substanzen zur Beschichtung von Saatgut oder zum Mikroverkapseln von aktiven Substanzen zur Verwendung über den Weg von Blättern oder Wurzeln oder direkt auf Früchte, zur Freisetzungsmodulation.

16. Verwendung der Addukte gemäß mindestens einem der Ansprüche 3, 6 und 11 zur Herstellung der Materialien, die Plastikmaterialien auf dem Gebiet der Konsumgüter ersetzen.

17. Verwendung der Addukte gemäß mindestens einem der Ansprüche 3, 6 und 11 in Formulierungen für die Nachgerbung und das Lederfärben und -fetten und für die Lederverarbeitung.

## Revendications

1. Procédé pour la production d'adduits de formule (1) 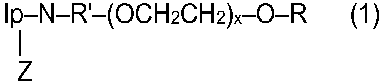 comprenant la réaction, dans de l'eau ou un solvant aqueux, d'une gélatine ou d'un hydrolysat protéique et/ou de leurs mélanges, de formule (3)
IpNH₂ (3)
avec un composé de formule (4)
R-(OCH₂CH₂)ₓ-OR (4)
formules dans lesquelles
Ip représente le résidu aminoacide, peptidique ou polypeptidique de la gélatine ou de l'hydrolysat protéique, lequel hydrolysat et/ou gélatine est obtenu à partir de sous-produits et/ou de déchets et/ou de résidus provenant de l'industrie du tannage, obtenus avant et après la phase de tannage, ou à partir de sous-produits et/ou de produits d'origine végétale, de déchets agroindustriels, de sous-produits et/ou produits d'origine animale ;
Z est -H ou -R'-(OCH₂CH₂)ₓ-O-R ;
x est un entier choisi dans l'ensemble formé par les entiers 3, 9 et 13 ;
R est 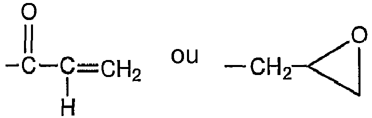
R' est

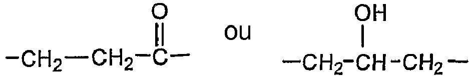

2. Procédé selon la revendication 1, dans lequel ladite gélatine et/ou ledit hydrolysat protéique dans ladite formule (1) a un rapport entre l'azote α-aminique et l'azote organique inférieur ou égal à 0,5 et une masse moléculaire moyenne comprise entre 200 et 100 000.

3. Adduit de formule (1) pouvant être obtenu conformément au procédé selon au moins l'une des revendications 1 et 2.

4. Procédé pour la production d'adduits réticulés, dans lequel l'adduit de formule (1) 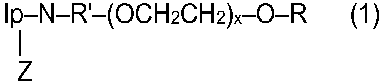 dans laquelle les substituants ont les significations indiquées dans les revendications précédentes,
est mis à réagir avec un agent de condensation ou avec un agent de réticulation ou un amorceur radicalaire dans le but de provoquer une réticulation.

5. Procédé selon la revendication 4, dans lequel ledit agent de condensation ou agent de réticulation ou amorceur radicalaire est choisi dans l'ensemble constitué par les aminés, les persulfates, les peroxydes et/ou les composés azoïques.

6. Adduit réticulé pouvant être obtenu à partir du procédé selon la revendication 4 ou 5.

7. Matériaux biodégradables pouvant être obtenus à partir de l'adduit selon la revendication 6.

8. Procédé pour la production d'adduits de formule (2) 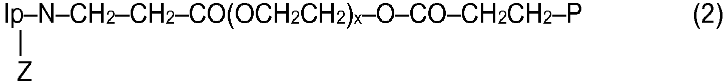 comprenant une réaction entre un composé de formule (1) 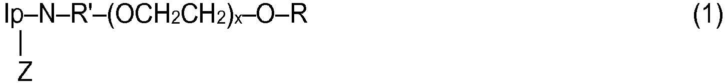 et des monomères de type acrylique et/ou vinylique de formule générale (5) 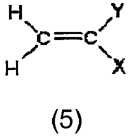 formules dans lesquelles
Ip représente le résidu aminoacide, peptidique ou polypeptidique de la gélatine ou de l'hydrolysat protéique, lequel hydrolysat et/ou gélatine est obtenu à partir de sous-produits et/ou de déchets et/ou de résidus provenant de l'industrie du tannage, obtenus avant et après la phase de tannage, ou à partir de sous-produits et/ou de produits d'origine végétale, de déchets agroindustriels, de sous-produits et/ou produits d'origine animale ;
Z correspond à -H ou -R'-(OCH₂CH₂)ₓ-O-R ou -CH₂-CH₂-CO(OCH₂CH₂)ₓ-O-CO-CH₂CH₂-P ;
x est un entier choisi dans l'ensemble formé par les entiers 3, 9 et 13 ;
R correspond à 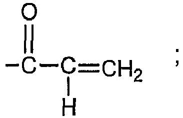
R' correspond à 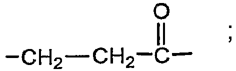
P représente un polymère de type acrylique ou vinylique de formule générale (6) 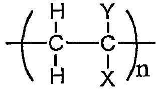 dans laquelle
Y correspond à H, CH₃, Cl, Br ou F ;
X correspond à : Cl, Br, F, H, 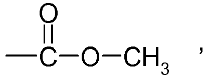 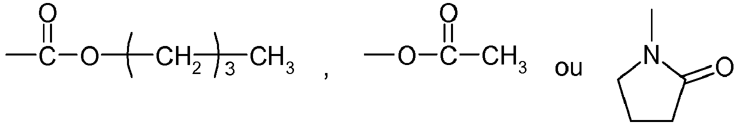
n est un entier inférieur à 250.

9. Procédé selon la revendication 8, dans lequel ladite gélatine et/ou ledit hydrolysat protéique dans ladite formule (2) a un rapport entre l'azote α-aminique et l'azote organique inférieur ou égal à 0,5 et une masse moléculaire moyenne comprise entre 200 et 100 000.

10. Procédé selon au moins l'une des revendications 8 et 9, dans lequel le polymère de ladite formule (6) est choisi dans l'ensemble formé par la polyvinylpyrrolidone, le poly(chlorure de vinylidène), le poly(acétate de vinyle) et les polymères acryliques choisis parmi le poly(acrylate de méthyle), le poly(acrylate de butyle), le poly(méthacrylate de méthyle).

11. Adduits pouvant être obtenus par le procédé selon au moins l'une des revendications 8 à 10.

12. Utilisation des adduits selon au moins l'une des revendications 3, 6 et 11, pour la production de matériaux d'emballage.

13. Utilisation des adduits selon au moins l'une des revendications 3, 6 et 11, pour la production de matériaux à usage agricole.

14. Utilisation selon la revendication 13, sous forme soluble et pouvant être mise en suspension, applicable directement sur le sol pour la formation de films et d'étoffes pour la formation de paillis par pulvérisation ou de paillis mis en oeuvre avec d'autres techniques d'application.

15. Utilisation des adduits selon au moins l'une des revendications 3, 6 et 11, pour la production de matériaux à utiliser en tant que substances pour enrober des graines ou pour microencapsuler des principes actifs à utiliser par voie foliaire ou radiculaire ou directement sur des fruits, pour une modulation de la libération.

16. Utilisation des adduits selon au moins l'une des revendications 3, 6 et 11, pour la production de matériaux remplaçant les matières plastiques dans le domaine des biens de consommation.

17. Utilisation des adduits selon au moins l'une des revendications 3, 6 et 11, dans des formulations de retannage et de teinture et de graissage des cuirs et pour la finition des cuirs.
